# DEMANDE DE BREVET EUROPEEN

(11) **EP 4 835 678 A1**
(43) Date de publication de la demande: **04.11.2026**
(21) Numéro de dépôt: 26173894.2
(22) Date de dépôt: 22.04.2026
(51) Int. Cl.: G06F 13/42

(54) **DISPOSITIF ELECTRONIQUE**

(30) Priorité: 30.04.2025 EP 25315153; 01.10.2025 FR 2511305
(71) Demandeur: STMicroelectronics International N.V., 1228 Plan-les-Ouates, Geneva (CH)
(72) Inventeur: TOMA, Mario, 38100 GRENOBLE (FR); DARBEL, Nicolas, 38000 GRENOBLE (FR); GUILLAUME, Raphael, 38000 GRENOBLE (FR)
(74) Mandataire: Cabinet Beaumont

(57) **Abrégé**

La présente description concerne un dispositif électronique (100) comprenant un premier bloc (140) de conversion d'un premier protocole (Non-standard) de transfert de données vers un deuxième protocole (110, 150) de transfert de données ;
ledit premier bloc (140) comprenant un élément de stockage (208), de type premier entrant, premier sortant (FIFO), de données transférées avec le premier protocole (non-standard) de transfert de données,
une première fréquence d'un premier signal d'horloge (Retransmission_Clock) utilisé par le premier bloc (140) pour la conversion étant basée au moins sur une deuxième fréquence d'un deuxième signal d'horloge (Source_Clock) du deuxième protocole de transfert de données (110, 150) et sur une information (C) relative au remplissage dudit élément de stockage (208).

## Description

### Domaine technique

La présente description concerne de façon générale les dispositifs électroniques et les méthodes de transfert de données de ces dispositifs électroniques.

### Technique antérieure

Transporter un protocole standard de communication haute vitesse à travers un canal différent, comme par exemple un canal physiquement différent et non standard, requiert globalement trois étapes : premièrement, une conversion de protocole (usuellement numérique) d'un protocole standard vers un protocole différent, par exemple non-standard, deuxièmement, une transmission à travers un canal différent, par exemple non-standard (par exemple en utilisant un canal radiofréquence), et troisièmement, une conversion inverse pour reconstruire le protocole standard originel.

La transmission à travers le canal non-standard peut introduire de la gigue ou une nécessiter une implémentation complexe.

### Résumé de l'invention

Il existe un besoin d'améliorer le transport d'un protocole de communication standard, par exemple haute vitesse, à travers un canal non-standard.

Un mode de réalisation pallie tout ou partie des inconvénients des dispositifs électroniques connus.

Un mode de réalisation prévoit un dispositif électronique comprenant un premier bloc de conversion d'un premier protocole de transfert de données vers un deuxième protocole de transfert de données ;
ledit premier bloc comprenant un élément de stockage, de type premier entrant, premier sortant, de données transférées avec le premier protocole de transfert de données,
une première fréquence d'un premier signal d'horloge utilisé par le premier bloc pour la conversion étant basée au moins sur une deuxième fréquence d'un deuxième signal d'horloge du deuxième protocole de transfert de données et sur une information relative au remplissage dudit élément de stockage.

Un mode de réalisation prévoit un procédé de transfert de données d'un dispositif électronique, comprenant :
- la conversion, par un premier bloc de conversion, d'un premier protocole de transfert de données vers un deuxième protocole de transfert de données ; ledit premier bloc comprenant un élément de stockage, de type premier entrant, premier sortant, de données transférées avec le premier protocole de transfert de données ; et
- un ajustement de la fréquence, d'un premier signal d'horloge utilisé par le premier bloc pour la conversion, basé au moins sur une fréquence d'un deuxième signal d'horloge du deuxième protocole de transfert de données et sur une information relative au remplissage dudit élément de stockage.

Selon un mode de réalisation, le dispositif comprend un deuxième bloc et un générateur du premier signal d'horloge ;
le générateur étant configuré pour générer le premier signal d'horloge en fonction d'une consigne issue du deuxième bloc ;
le deuxième bloc étant configuré pour déterminer ladite information relative au remplissage dudit élément de stockage et générer ladite consigne à partir de ladite information relative au remplissage dudit élément de stockage.

Selon un mode de réalisation, ladite information relative au remplissage dudit élément de stockage est déterminée suivant sur un taux de remplissage et sur un taux de sortie dudit élément de stockage.

Selon un mode de réalisation, ledit élément de stockage est configuré pour être rempli à moitié dans une phase d'initialisation.

Selon un mode de réalisation, ladite information relative au remplissage dudit élément de stockage est déterminée suivant une variation dudit remplissage en un temps donné.

Selon un mode de réalisation, ladite information relative au remplissage dudit élément de stockage est déterminée suivant des pointeurs de lecture dudit élément de stockage.

Selon un mode de réalisation, la première fréquence est adaptée pour être supérieure à la deuxième fréquence lorsque ladite valeur relative au remplissage dudit élément de stockage est supérieure à un premier seuil, et inférieure à la deuxième fréquence lorsque ladite valeur relative au remplissage dudit élément de stockage est inférieure à un deuxième seuil.

Selon un mode de réalisation, la deuxième fréquence est configurée pour varier de façon périodique.

Selon un mode de réalisation, si la deuxième fréquence est configurée pour varier selon un protocole d'horloge à étalement de spectre, alors la première fréquence est adaptée en fonction dudit protocole d'horloge à étalement de spectre.

Selon un mode de réalisation, la première fréquence est basée sur la deuxième fréquence à laquelle est ajoutée ou soustraite une valeur basée sur l'information relative au remplissage dudit élément de stockage.

Selon un mode de réalisation, la première fréquence est mise à jour lorsque ladite valeur basée sur l'information relative au remplissage dudit élément de stockage varie au-delà d'un seuil.

Selon un mode de réalisation, après mise à jour de la première fréquence, une période de temps donnée est observée avant que ladite information relative au remplissage dudit élément de stockage soit déterminée une nouvelle fois.

Selon un mode de réalisation ledit élément de stockage est une mémoire ou une banque de registres.

Selon un mode de réalisation, ledit deuxième protocole de transfert de données est un protocole parmi le groupe comprenant USB3^{®}, USB4^{®}, DisplayPort^{®} et Ethernet^{®}.

Selon un mode de réalisation ledit premier protocole de transfert de données est mis en œuvre par un canal radiofréquence, ou optique, ou un guide d'onde, relié à une entrée de l'élément de stockage.

Selon un mode de réalisation, ladite première fréquence est de plus basée sur une information mesurée, ou déterminée, ou prédéterminée, relative au deuxième protocole de transfert de donnée.

Selon un mode de réalisation, la première fréquence est ajustée pour que l'élément de stockage ne soit ni jamais vide, ni jamais plein.

Selon un mode de réalisation, le dispositif comprend un premier appareil et un deuxième appareil ;
le premier appareil comprenant :
   - une première interface physique mettant en œuvre le deuxième protocole de transfert de données et configurée pour être reliée à un connecteur compatible avec le deuxième protocole de transfert de données;
   - un troisième bloc, relié à la première interface physique et configuré pour mettre en œuvre une conversion du deuxième protocole de transfert de données vers le premier protocole de transfert de données ; et
   - un émetteur radiofréquence du canal radiofréquence, relié au deuxième bloc, et utilisant le premier protocole de transfert de données ;
le deuxième appareil comprenant :
   - un récepteur radiofréquence du canal radiofréquence et utilisant le premier protocole de transfert de données ;
   - le premier bloc, relié au récepteur radiofréquence ;
   - une deuxième interface physique mettant en œuvre le deuxième protocole de transfert de données et configurée pour être reliée à un connecteur compatible avec le deuxième protocole de transfert de données.

Selon un mode de réalisation, ladite information mesurée relative au deuxième protocole de transfert de données est mesurée dans le premier appareil et transférée au deuxième appareil, via le canal, pour être utilisée par le premier bloc.

### Brève description des dessins

Ces caractéristiques et avantages, ainsi que d'autres, seront exposés en détail dans la description suivante de modes de réalisation particuliers faite à titre non limitatif en relation avec les figures jointes parmi lesquelles :
la figure 1 illustre schématiquement sous la forme de blocs fonctionnels, un exemple de chaîne de transfert de données à laquelle les modes de réalisations peuvent s'appliquer ;
la figure 2 illustre, schématiquement sous la forme de blocs fonctionnels, un mode de réalisation de la chaîne de transfert de données de la figure 1 ;
la figure 3 illustre un procédé de transfert de données mis en œuvre dans la figure 2 selon un mode de réalisation ; et
la figure 4 illustre schématiquement sous la forme de blocs fonctionnels, un exemple d'une chaîne de transfert de données de la figure 1 selon un mode de réalisation.

### Description des modes de réalisation

De mêmes éléments ont été désignés par de mêmes références dans les différentes figures. En particulier, les éléments structurels et/ou fonctionnels communs aux différents modes de réalisation peuvent présenter les mêmes références et peuvent disposer de propriétés structurelles, dimensionnelles et matérielles identiques.

Par souci de clarté, seuls les étapes et éléments utiles à la compréhension des modes de réalisation décrits ont été représentés et sont détaillés.

Sauf précision contraire, lorsque l'on fait référence à deux éléments connectés entre eux, cela signifie directement connectés sans éléments intermédiaires autres que des conducteurs, et lorsque l'on fait référence à deux éléments reliés (en anglais « coupled ») entre eux, cela signifie que ces deux éléments peuvent être connectés ou être reliés par l'intermédiaire d'un ou plusieurs autres éléments.

Dans la description qui suit, lorsque l'on fait référence à des qualificatifs de position absolue, tels que les termes « avant », « arrière », « haut », « bas », « gauche », « droite », etc., ou relative, tels que les termes « dessus », « dessous », « supérieur », « inférieur », etc., ou à des qualificatifs d'orientation, tels que les termes « horizontal », « vertical », etc., il est fait référence, sauf précision contraire, à l'orientation des figures.

Sauf précision contraire, les expressions « environ », « approximativement », « sensiblement », et « de l'ordre de » signifient à 10 % ou à 10° près, de préférence à 5 % ou à 5° près.

Dans le texte :
- un lien série est défini comme un canal de communication où l'information est envoyée séquentiellement, un bit à la fois ;
- la gigue est définie comme une variation temporelle d'un ensemble de fronts de signaux par rapport à leur valeur idéale (i.e. alignée avec un signal d'horloge de référence) ;
- un resynchroniseur (retimer en anglais) est défini comme un composant standardisé capable de retransmettre un signal série, par exemple de type USB3^{®}/USB4^{®}, améliorant la qualité du signal et permettant de plus longues distances de communications ; et
- une boucle à phase asservie (PLL) est définie comme étant un composant ou un circuit utilisé pour générer un signal d'horloge avec une fréquence désirée, à partir d'un signal d'horloge de référence et d'un facteur de multiplication.

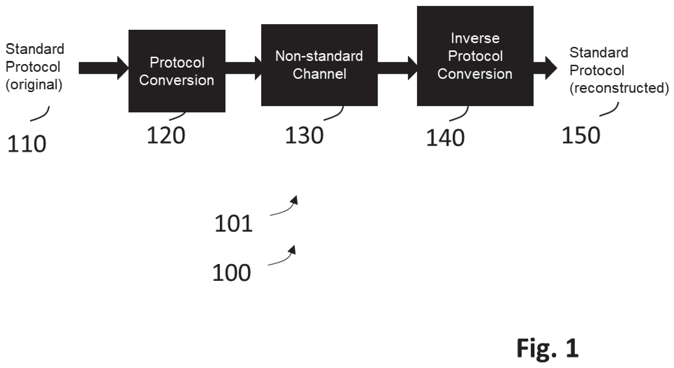

La figure 1 illustre très schématiquement et sous la forme de blocs fonctionnels, un exemple de chaîne de transfert 101 de données à laquelle les modes de réalisations peuvent s'appliquer. La chaîne de transfert 101 est par exemple mise en œuvre au sein d'un dispositif 100.

La chaîne de transfert 101 de la figure 1 comprend le transport d'un protocole de communication 110 (Standard Protocol (original)) haute vitesse, tel qu'un lien série haute vitesse (~10Gbps), USB3^{®}, USB3.2^{®}, USB4^{®}, DisplayPort^{®}, Ethernet^{®}, à travers un canal 130 différent. Le canal 130 est par exemple physiquement différent que le protocole 110 et/ou utilise par exemple un protocole de données non-standard (ou Non-standard) ou un protocole de données standard mais différent du protocole de communication 110. Par simplification, dans le texte, le canal 130 est aussi appelé canal 130 non-standard. Le canal 130 non-standard est par exemple un canal radiofréquence, optique ou un guide d'onde.

Par protocole standard, on entend un protocole par exemple normalisé ou répandu et documenté, à l'inverse d'un protocole propriétaire, ou personnalisé, qui lui, pourra représenter un type de protocole non-standard ou Non-standard.

Dans le texte, le terme protocole se réfère de façon équivalente aux données transférées par ce protocole.

Dans l'exemple de la figure 1, le transport du protocole de communication 110, autrement dit le transport des données selon le protocole de communication 110, comporte une étape de conversion du protocole 110 vers un protocole non-standard utilisé par un canal 130 (Non-standard Channel). Cette conversion est mise en œuvre par exemple par un bloc de conversion 120 (Protocol Conversion). La conversion est par exemple mise en œuvre de façon numérique ou analogique.

Dans l'exemple représenté, une fois la conversion réalisée, le protocole converti, autrement dit les données converties du protocole standard vers le protocole non-standard utilisé par le canal 130, est transmis à travers le canal 130.

Le protocole transmis, autrement dit les données transmises avec le protocole non-standard, subit, avec un bloc de reconversion 140 (Inverse Protocol Conversion), une reconstruction 150 (Standard Protocol (reconstructed)), autrement dit une reconversion, vers le protocole original standard 110.

Les protocoles séries usuels tels que USB3^{®}, USB3.2^{®}, USB4^{®}, DisplayPort^{®}, Ethernet^{®},..., permettent le transport des données seules, par exemple un bit à la fois. Néanmoins, ces protocoles ne transportent pas le signal d'horloge originel utilisé pour générer le transport des données.

Pour reconstruire correctement les bits des données, le signal d'horloge originel, utilisé pour générer le transport des données, doit être reconstitué par exemple par un récepteur utilisant un composant de reconstitution de signal d'horloge appelé CDR (Clock Data Recovery en anglais). Néanmoins, le signal d'horloge reconstitué est généralement dégradé par rapport au signal d'horloge originel utilisé pour générer le transport des données.

Le canal 130 utilisant le protocole non-standard ne transporte par exemple que les données et pas le signal d'horloge associé. Cela peut nécessiter l'utilisation d'un bloc de reconstruction de signal d'horloge CDR.

Le canal 130 peut en outre introduire de la gigue additionnelle ce qui peut dégrader encore plus la qualité du signal d'horloge reconstruit.

La qualité du signal d'horloge est spécifiée pour chacun des protocoles standards USB3^{®}, USB3.2^{®}, USB4^{®}, DisplayPort^{®}, Ethernet^{®},..., avec un paramètre principal qui est la gigue. Le signal d'horloge utilisé pour la reconversion est reconstruit à partir des données entrantes qui sont passées à travers le canal 130, la gigue introduite par le canal 130 dégrade ainsi la gigue du signal d'horloge reconstruit. Si la gigue associée devient trop large, le signal reconstruit deviendrait incompatible avec le niveau de gigue maximal demandé par le standard associé.

Une solution possible pourrait consister à utiliser par exemple des resynchroniseurs USB3^{®}/USB3.2^{®}/USB4^{®} ou des répéteurs DisplayPort^{®}. Néanmoins, cette solution n'est pas compatible avec l'utilisation du canal 130.

D'autres solutions possibles pourraient consister en :
- la mise en œuvre d'une reconversion utilisant une version reconstituée du signal d'horloge originel obtenu par un composant de reconstitution CDR ; ou
- la mise en œuvre d'une reconversion utilisant un signal d'horloge indépendant et non dégradé qui aurait la même fréquence nominale (qui est précisée dans le standard) que le signal d'horloge originel ; dans ce cas, les différences résiduelles entre signaux d'horloge sont compensées par l'ajout ou l'effacement de symboles spécifiques SKIP qui sont définis dans le standard à cet effet.

Dans le cas de données audio embarquées dans un flux vidéo, le signal d'horloge lié aux données audio n'est pas disponible du côté de réception du canal 130 et il ne peut pas être reconstruit directement depuis les données transmises à travers le canal 130. Pour pallier cela, un signal d'horloge audio est donc généré en utilisant un algorithme numérique depuis un signal d'horloge de référence plus rapide et en utilisant des références temporelles (timestamp en anglais) injecté dans le flux audio. Néanmoins cette solution n'est rendue possible que par la fréquence faible des signaux audios.

Dans le cas d'un canal radiofréquence et où le protocole standard utilise un étalement de spectre (spread spectrum clocking, SSC, en anglais), cela dégrade le budget de gigue radiofréquence amenant de la complexité et une consommation accrue.

Ces méthodes ne sont pas agnostiques vis-à-vis des différents types de standards et fonctionnent uniquement si les symboles SKIP sont présents comme définis dans les standards.

Afin de pallier ces problématiques, les modes de réalisation décrits sont basés sur une procédure permettant de contrôler dynamiquement la génération du signal d'horloge servant à la reconversion.

Les modes réalisation décrits prévoient ainsi un dispositif électronique comprenant un premier bloc (140) de conversion d'un premier protocole de transfert de données vers un deuxième protocole (110, 150) de transfert de données ;
ledit premier bloc (140) comprenant un élément de stockage, de type premier entrant, premier sortant (FIFO), de données transférées avec le premier protocole (non-standard) de transfert de données ;
une fréquence d'un premier signal d'horloge (Retranmission_Clock), utilisé par le premier bloc (140) pour la conversion, étant basée au moins sur une fréquence d'un deuxième signal d'horloge (Source_Clock) du deuxième protocole de transfert de données (110, 150) et sur une information relative au remplissage dudit élément de stockage.

Dans la suite du texte, le premier protocole de transfert de données est également appelé protocole non-standard, ou protocole de transfert de donnée non-standard, ou encore protocole de canal, ou protocole de canal non-standard. De plus, le deuxième protocole de transfert de données est également appelé protocole standard, ou protocole standard reconstruit.

Les modes de réalisation sont ainsi basés sur une boucle de rétroaction négative dont la rétroaction varie en fonction d'un état de remplissage de l'élément de stockage. Cette boucle de rétroaction permet ainsi de modifier la fréquence du premier signal d'horloge en fonction d'informations relatives à l'état de remplissage de l'élément de stockage.

Cela permet en outre d'adresser le cas où les données sont traitées par paquets (burst en anglais).

Un autre avantage est que la fréquence du signal d'horloge utilisé dans le canal non-standard 130 peut être supérieure au signal d'horloge utilisé dans le protocole standard. Cela permet de mettre en place un multiplexage temporel de plusieurs flux de données.

Les modes de réalisation décrits permettent en outre d'améliorer la qualité du signal d'horloge utilisé par le bloc 140 pour reconstruire les données reçues par le canal 130.

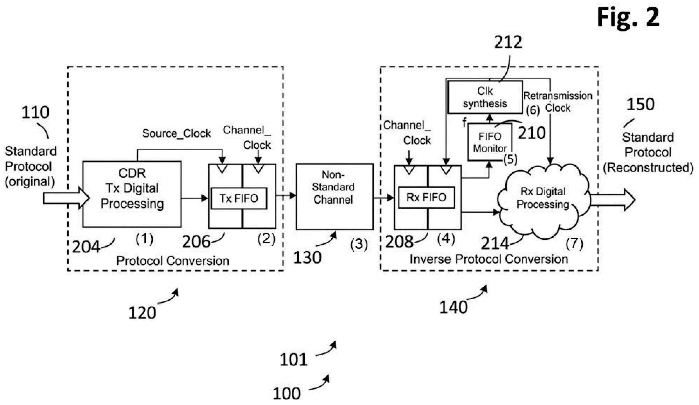

La figure 2 illustre, schématiquement sous la forme de blocs fonctionnels, un mode de réalisation de la chaîne de transfert de données de la figure 1.

Dans l'exemple représenté, le bloc de conversion 120 comprend un bloc fonctionnel 204 (Tx Digital Processing) et un bloc fonctionnel 206 (Tx FIFO).

Dans l'exemple représenté, le bloc 204 est configuré pour recevoir des données avec le protocole standard de transfert de données 110 (tel qu'un des protocoles USB3/USB4/DisplayPort/Ethernet). Le bloc 204 est configuré pour traiter, par exemple numériquement, la conversion du protocole série standard 110 vers le protocole non-standard utilisé par le canal 130.

Le bloc 204 comprend par exemple un sous-bloc ou composant (CDR) de reconstitution de signal d'horloge capable de retrouver le signal d'horloge source (Source_Clock) utilisé pour générer le flux de donnée entrant du protocole standard 110. Le signal d'horloge originel, ou source, détecté par le composant CDR est fourni au bloc 206. Le bloc 206 reçoit également en entrée un signal d'horloge de canal (Channel_Clock) propre au canal non-standard 130.

Le bloc 206 met en œuvre le passage du signal d'horloge source (Source_Clock) vers le signal d'horloge du canal 130. Le signal d'horloge source (Source_Clock) et le signal d'horloge du canal 130 (Channel_Clock) sont indépendants. Dans un exemple, le signal d'horloge du canal 130 est plus rapide que le signal d'horloge source ce qui permet d'éviter la perte de données.

Le bloc 206 est par exemple un élément de stockage, comme une banque de registre, un registre, ou une mémoire, de type premier entrant, premier sortant (FIFO). Dans le cas où le signal d'horloge du canal 130 est plus rapide que le signal d'horloge source, l'élément de stockage 206 peut être temporairement vide puisque les données entrantes vont le remplir moins rapidement par rapport à la vitesse de sortie des données.

Dans l'exemple représenté, le canal non-standard 130 comprend par exemple un émetteur-récepteur et un moyen de transmission physique. Dans un exemple, l'émetteur-récepteur est un émetteur-récepteur radiofréquence pour une communication à travers l'air (over-the-air en anglais), ou un émetteur-récepteur optique pour une communication par fibre optique. Le canal 130 est par exemple implémenté de façon indépendante par rapport au bloc 204, c'est-à-dire que le protocole standard utilisé à l'entrée du bloc 120 ou par le bloc 204 n'est pas utilisé par le canal 130. En particulier, le signal d'horloge du canal 130 et le signal d'horloge source sont par exemple indépendants.

Dans l'exemple où l'élément de stockage 206 devient vide, le canal 130 est configuré par exemple pour ne pas corrompre les données alors qu'il essaie de lire le contenu de l'élément de stockage 206.

Dans un exemple, un bloc émetteur du canal 130 peut insérer des symboles, par exemple IDLE, qui sont ensuite enlevés par un bloc récepteur du canal 130 en fin de transmission par le canal. Le bloc émetteur du canal 130 peut en outre par exemple insérer des données d'un canal bas débit. En d'autres termes, dans le cas où le canal 130 a une fréquence suffisamment élevée, par exemple supérieure à celle du signal d'horloge source (Source_Clock), il est alors possible de transporter, à travers le canal 130, des données additionnelles, par exemple non incluses dans le protocole standard 110. Ces données additionnelles sont ensuite par exemple enlevées par le récepteur du canal 130, avant d'entrer dans le bloc 140.

Dans l'exemple illustré, le bloc 140 comprend un élément de stockage 208 (Rx FIFO) qui reçoit les données arrivant du canal 130 au rythme du signal d'horloge du canal (Channel_Clock). L'élément de stockage 208 est par exemple une banque de registre, un registre, ou une mémoire, de type premier entrant, premier sortant (FIFO). Les données rentrent dans l'élément de stockage 208 au rythme du signal d'horloge de canal 130 et sortent au rythme d'un signal d'horloge dit de retransmission ou de reconversion (Retransmission_Clock) .

Le bloc 140 comprend par exemple un générateur de signal d'horloge 212 (Clk synthesis) configuré pour générer le signal d'horloge de reconversion (Retransmission_Clock) en fonction d'une valeur de consigne fréquentielle f. Le générateur 212 comprend par exemple un oscillateur, et/ou une boucle à phase asservie, et/ou une boucle à phase asservie fractionnelle, et/ou un circuit d'interpolation de phase à partir d'un signal d'horloge fixe.

Dans l'exemple représenté, le bloc 140 comprend un bloc fonctionnel 210 (FIFO Monitor) qui est configuré de sorte à déterminer la valeur de consigne fréquentielle f à envoyer au générateur 212 en fonction d'une information relative au remplissage de l'élément de stockage 208 comme par exemple un niveau ou un taux de remplissage.

Dans un exemple, le bloc 210 est relié au, ou fait partie du, générateur 212. Le bloc 210 est par exemple configuré de sorte à modifier, et/ou moduler, et/ou ajuster, la valeur de consigne fréquentielle f, ou consigne de fréquence, f en fonction d'une information (une information pouvant contenir de multiples données) relative à un niveau, ou à un taux, de remplissage de l'élément de stockage 208, et en fonction d'autres informations ou valeurs.

Dans un exemple, l'information relative au remplissage de l'élément de stockage 208 est déterminée suivant un taux, ou débit, de remplissage de données en entrée de l'élément de stockage 208 et sur un taux, ou débit, de sortie de données de l'élément de stockage 208.

Dans un exemple, l'information relative au remplissage de l'élément de stockage 208 est déterminée suivant une variation du niveau de remplissage de l'élément de stockage 208 pendant un temps donné.

Dans un exemple, l'information relative au remplissage de l'élément de stockage 208 est déterminée suivant des pointeurs de lecture de l'élément de stockage 208.

Dans un exemple, une fréquence du signal d'horloge de reconversion (Retransmission_Clock) est supérieure à une fréquence du signal d'horloge du canal 130 (Channel Clk).

Dans un autre exemple, la fréquence du signal d'horloge de reconversion (Retransmission_Clock) est inférieure à la fréquence du signal d'horloge du canal 130 (Channel Clk). Dans ce cas, il est possible d'envoyer plus de données à travers le canal 130 que ce qui est requis par le protocole standard 110.

Dans un exemple, l'élément de stockage 208 est rempli à moitié dans une phase d'initialisation.

Dans un exemple, la consigne de fréquence f est basée sur une fréquence du signal d'horloge du canal 130 (Channel Clk) à laquelle est ajoutée ou soustraite une valeur basée sur une information relative au niveau de remplissage de l'élément de stockage 208. Par exemple, si le niveau de remplissage de l'élément de stockage 208 augmente, alors le bloc 210 va augmenter la consigne fréquentielle f pour que la fréquence du signal d'horloge de reconversion (Retransmission_Clock) généré par le générateur 212 soit au-delà de la fréquence du signal d'horloge du canal 130 (Channel Clk). Au contraire, si le niveau de remplissage de l'élément de stockage 208 diminue, et facultativement devient inférieur à la moitié de l'élément de stockage 208, alors le bloc 210 va diminuer la consigne fréquentielle f pour que le générateur 212 diminue la fréquence du signal d'horloge de reconversion (Retransmission_Clock) .

Dans un exemple, la consigne fréquentielle f est mise à jour par le bloc 210 lorsqu'une valeur du niveau de remplissage de l'élément de stockage 208 a une variation supérieure à un seuil.

Dans un exemple, la consigne fréquentielle f est basée, en plus du niveau de remplissage de l'élément de stockage 208, sur une information extraite, ou mesurée, du protocole standard de transfert de donnée, comme par exemple une information sur un taux de transmission de bits maximal. Dans un exemple, cette information du protocole standard de transfert de donnée est envoyée à travers le canal 130 et facultativement mise à jour dynamiquement. Dans un exemple où le signal Source_Clock est modulé en faisant varier la fréquence dans le temps (SSC), l'information concernant la modulation de fréquence du signal Source_Clock peut être envoyée à travers le canal 130 pour ajuster la consigne fréquentielle f.

Dans un exemple, la consigne fréquentielle f est ajustée pour que l'élément de stockage 208 ne soit ni jamais vide, ni jamais plein.

Dans un exemple, la consigne fréquentielle f est mise à jour par le bloc 210 en fonction de l'information relative au niveau de remplissage de l'élément de stockage 208, puis une période de temps donnée est observée avant que l'information relative au niveau de remplissage de l'élément de stockage soit de nouveau déterminée par le bloc 210 et envoyée au générateur 212. Cela permet un temps de stabilisation.

Dans un exemple, le bloc 210 reçoit des informations de l'élément de stockage 208 lui indiquant le niveau de remplissage « C » de l'élément de stockage 208, un ou des seuils de remplissage, comme par exemple un seuil de remplissage appelé « F » indiquant que l'élément de stockage 208 est presque plein ou un seuil de remplissage appelé « E » indiquant que l'élément de stockage 208 est presque vide. Le niveau de remplissage « C » de l'élément de stockage 208 est par exemple obtenu en évaluant le nombre d'éléments ou de données stockés dans l'élément de stockage 208 à un temps donné, ainsi que leur taille, et comparant cela à la taille totale de l'élément de stockage 208.

Dans un exemple, le bloc 210 délivre la valeur de fréquence de consigne f au générateur 212, par exemple en fonction des éléments « C », « F », ou « E », et de la fréquence f_{DEFAULT} du signal d'horloge source (Source_Clock), pour que celui-ci génère le signal d'horloge de reconversion avec cette valeur de consigne fréquentielle f. Par défaut, par exemple lors d'une phase d'initialisation, la fréquence f est égale à la fréquence f_{DEFAULT} du signal d'horloge source (Source_Clock) qui est connue car spécifiée dans le protocole standard. La fréquence f est par exemple mise à jour dynamiquement par le bloc 210 pour compenser des différences résiduelles entre le signal d'horloge source (Source_Clock) et le signal d'horloge de reconversion (Retransmission_Clock).

L'association du bloc 210 et du générateur 212 permet d'asservir la vitesse de sortie des données de l'élément de stockage 208 en fonction de données relatives à son remplissage, ce qui, in fine, permet de s'adapter à la gigue inhérente au canal non-standard 130 ou à d'autres perturbations. Le signal d'horloge de reconversion (Retransmission_Clock) présente ainsi une faible gigue. En effet, le signal d'horloge de reconversion (Retransmission_Clock) étant indépendant du signal d'horloge du canal 130, il n'hérite pas de sa gigue.

Dans l'exemple représenté, la sortie du bloc 208 et la sortie du générateur 212 sont reliées à un bloc fonctionnel 214 (Rx Digital Processing) de reconstruction de protocole standard, par exemple par voie numérique ou analogique. Le bloc 214 reçoit les données provenant de la sortie de l'élément de stockage 208 ainsi que le signal d'horloge de reconversion (Retransmission_Clock). A partir de ces éléments, le bloc 214 reconstruit le protocole standard, autrement dit, le bloc 214 reconstruit les données de sortie de l'élément de stockage 208 au format du protocole standard.

Le bloc 214 délivre en sortie les données 150 (Standard Protocol (reconstructed)) au format du lien série compatible avec le protocole standard original 110 (tel que USB3/USB4/DisplayPOrt/Ethernet).

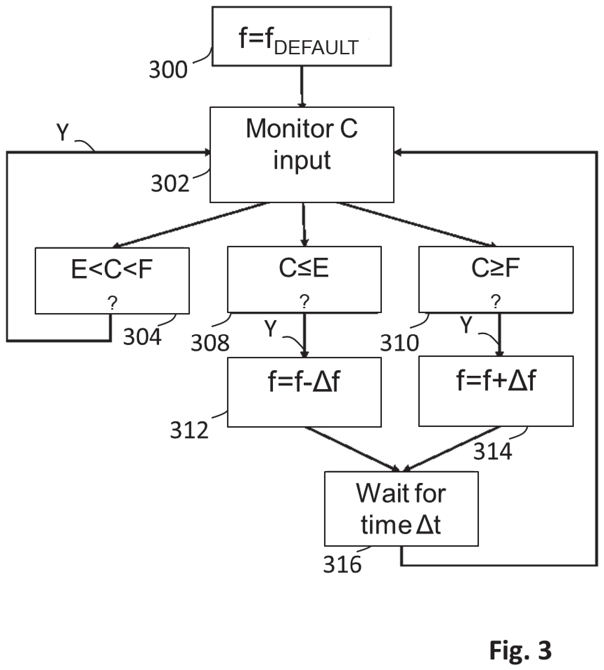

La figure 3 illustre un procédé de transfert de données mis en œuvre dans la figure 2 selon un mode de réalisation. Plus particulièrement, l'exemple illustré représente un exemple de fonctionnement du bloc 210 et du générateur 212.

Dans une étape 300 (f:=f_{DEFAULT}), facultative, la consigne fréquentielle f indiquée au générateur 212 par le bloc 210 correspond à la fréquence F_{DEFAULT} du signal d'horloge source (Source_Clock), qui est connue car spécifiée dans le protocole standard.

Dans une étape 302 (Monitor C input), par exemple postérieure à l'étape 300, le bloc 210 acquiert le niveau de remplissage « C » courant de l'élément de stockage 208. Dans un exemple, ce niveau de remplissage est par exemple déterminé suivant des pointeurs de lecture.

Dans des étapes 304 (E<C<F?), 308 (E≤C?), 310 (C≥F) postérieures à l'étape 302, le bloc 210 compare la valeur déterminée de C avec les seuils E et/ou F.

Dans l'étape 304, si le niveau de remplissage « C » de l'élément de stockage 208 est compris strictement entre les seuils E et F (branche Y), alors la valeur courante de la consigne fréquentielle f, et donc la fréquence en sortie du générateur 214, n'est pas modifiée et l'étape 302 est mise en œuvre, après avoir attendu par exemple un certain délai.

Dans l'étape 308, si le niveau de remplissage « C » de l'élément de stockage 208 est inférieur ou égal au seuil E, alors (branche Y) une étape 312 (f:=f₋Δf) est mise en œuvre.

Dans l'étape 310, si le niveau de remplissage « C » de l'élément de stockage 208 est supérieur ou égal au seuil F, alors (branche Y) une étape 314 (f:=f₊Δf) est mise en œuvre.

Dans l'étape 312, la valeur f en instance est diminuée d'une valeur Δf qui est par exemple prédéterminée par programmation. Cela permet de diminuer la fréquence en sortie du générateur et ainsi diminuer le rythme de sortie des données de l'élément de stockage 208.

Dans l'étape 314, la valeur f en instance est augmentée de la valeur Δf, qui est par exemple égale ou différente de celui de l'étape 312, et qui est par exemple prédéterminée par programmation. Cela permet d'augmenter le rythme de sortie des données de l'élément de stockage 208 afin que le niveau de remplissage de l'élément d stockage 208 soit plus ou moins proche de la moitié.

Suite aux étapes 312 ou 314, une étape facultative 316 (Wait for time Δt) est mise en œuvre. Dans l'étape 316, après que la valeur f ait été mise à jour par le bloc 210, l'étape 302 est mise en œuvre mais en attendant un temps Δt pour que la variation de fréquence du signal d'horloge en sortie du générateur ne dépasse pas Δf/Δt. Cela est requis pour de nombreuses applications car la valeur maximale de ce paramètre est définie par le standard originel par exemple. Une autre raison est qu'une valeur trop élevée de Δf/Δt peut causer des problèmes de reconstruction d'horloge pour un bloc CDR qui se trouve en aval (i.e. dans le bloc de protocole standard 150 qui reçoit le signal reconstruit).

Les exemples des figures 2 et 3 permettent d'asservir la fréquence du signal d'horloge de reconversion (Retransmission_Clock) à la fréquence d'arrivée des données à l'entrée de l'élément de stockage 208.

Les exemples des figures 2 et 3 permettent en outre d'utiliser un canal non-standard totalement indépendant du protocole standard 110, en d'autres termes ils sont dits « orthogonaux ».

Les exemples des figures 2 et 3 permettent également que le protocole standard utilisé mette en œuvre un étalement de spectre (SSC).

Les exemples des figures 2 et 3 ont également l'avantage de proposer une solution paramétrique dans la mesure où des paramètres tels que la taille de l'élément de stockage 208, les seuils E, F, ou encore les éléments Δf, Δt, sont paramétrables. Ces paramètres pourront être ajustés pour modifier la latence de transmission de la chaîne de transmission ou encore les caractéristiques du signal d'horloge de reconversion.

Les exemples des figures 2 et 3 permettent une reconstruction robuste du signal d'horloge de reconversion alors même que le signal d'horloge (Channel_Clock) du canal 130 est plus rapide que le signal d'horloge du protocole standard (Source_Clock), ce qui ouvre la porte à de nouvelles applications telles que le multiplexage temporel de plusieurs flux de données.

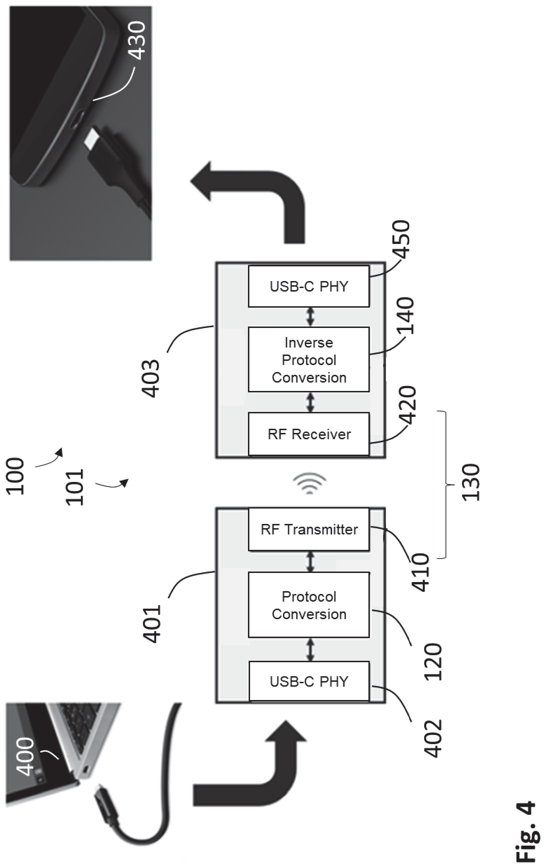

La figure 4 illustre schématiquement sous la forme de blocs fonctionnels, un exemple de la chaîne de transfert de données 101 de la figure 1 selon un mode de réalisation. La chaîne de transfert de données 101 de la figure 4 assure la transmission de données entre un dispositif électronique 400 (ici un ordinateur) et un dispositif électronique 430 (ici un téléphone intelligent) (smartphone en anglais).

La chaîne de transfert de données 101 de la figure 4 comprend deux dispositifs électroniques 401, 402 communiquant entre eux sans fil à travers le canal radiofréquence 130.

Dans l'exemple représenté, l'ordinateur 400 est relié avec un câble USB de type USB3 (ou USB-C) à une interface physique 402 (USB-C PHY) de type USB-C (ou USB-3) du dispositif électronique 401, où est mis en œuvre le protocole standard USB3.

Dans l'exemple représenté, l'interface physique 402 est reliée au bloc de conversion 120 similaire ou identique à celui de la figure 1 ou 2.

Dans la chaîne de transmission 101 de la figure 4, le canal non-standard 130 comprend un circuit émetteur 410 (RF Transmitter), implémenté dans le dispositif 401, et qui module et émet des ondes radiofréquences modulées en prenant en compte le protocole non-standard suite à la conversion de protocole mise en œuvre par le bloc 120. Le canal non-standard 130 comprend en outre un circuit récepteur 420 (RF Receiver), implémenté dans le dispositif 403, qui reçoit, démodule et traite les ondes radiofréquences reçues du dispositif 401.

Dans l'exemple illustré, le circuit 420 est relié au bloc 140 implémenté dans le dispositif 403. En sortie du bloc de reconversion 140, le protocole standard USB-C, présent initialement en entrée du dispositif 401, est reconstruit et envoyé au niveau d'une interface physique 450 (USB-C PHY) de type USB-C (ou USB-3) du dispositif électronique 403, où est mis en œuvre le protocole standard USB3.

Dans l'exemple illustré, un câble de type USB-C, ou USB3, relie l'interface physique 450 au dispositif électronique 430.

L'exemple de la figure 4 permet par exemple le transfert de données rapide et robuste, en utilisant un protocole non-standard, entre deux dispositifs électroniques utilisant des protocoles série standard.

Divers modes de réalisation et variantes ont été décrits. La personne du métier comprendra que certaines caractéristiques de ces divers modes de réalisation et variantes pourraient être combinées, et d'autres variantes apparaîtront à la personne du métier. En particulier, le bloc 210 et le générateur 212 peuvent être implémentés en un seul circuit.

Enfin, la mise en œuvre pratique des modes de réalisation et variantes décrits est à la portée de la personne du métier à partir des indications fonctionnelles données ci-dessus. En particulier, la personne du métier pourra adapter la consigne fréquentielle f en fonction, non seulement d'une information relative au remplissage de l'élément de stockage 208, mais également d'autres informations relatives au fonctionnement du canal non-standard ou du protocole standard 110.

Les applications des modes de réalisation décrits sont par exemple l'automobile, ou toute application nécessitant le transfert d'un protocole standard à travers un protocole non-standard.

## Revendications

1. Dispositif électronique (100) comprenant un premier bloc (140) de conversion d'un premier protocole (Non-standard) de transfert de données vers un deuxième protocole (110, 150) de transfert de données ;
ledit premier bloc (140) comprenant un élément de stockage (208), de type premier entrant, premier sortant (FIFO), de données transférées avec le premier protocole (non-standard) de transfert de données,
une première fréquence d'un premier signal d'horloge (Retransmission_Clock) utilisé par le premier bloc (140) pour la conversion étant basée au moins sur une deuxième fréquence d'un deuxième signal d'horloge (Source_Clock) du deuxième protocole de transfert de données (110, 150) et sur une information (C) relative au remplissage dudit élément de stockage (208).

2. Procédé de transfert de données d'un dispositif électronique (100), comprenant :
- la conversion, par un premier bloc de conversion (140), d'un premier protocole de transfert de données (Non-standard) vers un deuxième protocole de transfert de données (110, 150); ledit premier bloc (140) comprenant un élément de stockage (208), de type premier entrant, premier sortant (FIFO), de données transférées avec le premier protocole de transfert de données (Non-standard) ; et
- un ajustement de la fréquence, d'un premier signal d'horloge (Retransmission_Clock) utilisé par le premier bloc (140) pour la conversion, basé au moins sur une fréquence d'un deuxième signal d'horloge (Source_Clock) du deuxième protocole de transfert de données (110, 150) et sur une information relative au remplissage dudit élément de stockage (208) .

3. Dispositif selon la revendication 1, ou procédé selon la revendication 2, dans lequel le dispositif comprend un deuxième bloc (210) et un générateur (212) du premier signal d'horloge (Retransmission_Clock) ;
le générateur (212) étant configuré pour générer le premier signal d'horloge (Retransmission_Clock) en fonction d'une consigne (f) issue du deuxième bloc (210) ;
le deuxième bloc (210) étant configuré pour déterminer ladite information (C) relative au remplissage dudit élément de stockage (208) et générer ladite consigne (f) à partir de ladite information (C) relative au remplissage dudit élément de stockage (208).

4. Dispositif selon la revendication 1 ou 3, ou procédé selon la revendication 2 ou 3, dans lequel ladite information relative au remplissage dudit élément de stockage (208) est déterminée suivant sur un taux de remplissage et sur un taux de sortie dudit élément de stockage (208) ; ou
ledit élément de stockage (208) est configuré pour être rempli à moitié dans une phase d'initialisation.

5. Dispositif selon l'une quelconque des revendications 1 ou 3 ou 4, ou procédé selon l'une quelconque des revendications 2 à 4, dans lequel ladite information relative au remplissage dudit élément de stockage est déterminée suivant une variation dudit remplissage en un temps donné.

6. Dispositif selon l'une quelconque des revendications 1 ou 3 à 5, ou procédé selon l'une quelconque des revendications 2 à 5, dans lequel :
ladite information relative au remplissage dudit élément de stockage est déterminée suivant des pointeurs de lecture dudit élément de stockage (208) ; ou
la première fréquence est adaptée pour être supérieure à la deuxième fréquence lorsque ladite valeur relative au remplissage dudit élément de stockage (208) est supérieure à un premier seuil (F), et inférieure à la deuxième fréquence lorsque ladite valeur relative au remplissage dudit élément de stockage (208) est inférieure à un deuxième seuil (E).

7. Dispositif ou procédé selon la revendication 6, dans lequel la deuxième fréquence est configurée pour varier de façon périodique.

8. Dispositif ou procédé selon la revendication 7, dans lequel, si la deuxième fréquence est configurée pour varier selon un protocole d'horloge à étalement de spectre (SSC), alors la première fréquence est adaptée en fonction dudit protocole d'horloge à étalement de spectre (SSC).

9. Dispositif selon l'une quelconque des revendications 1 ou 3 à 8, ou procédé selon l'une quelconque des revendications 2 à 8, dans lequel la première fréquence est basée sur la deuxième fréquence à laquelle est ajoutée ou soustraite une valeur basée sur l'information (C) relative au remplissage dudit élément de stockage (208).

10. Dispositif ou procédé selon la revendication 9, dans lequel la première fréquence est mise à jour lorsque ladite valeur basée sur l'information (C) relative au remplissage dudit élément de stockage (208) varie au-delà d'un seuil.

11. Dispositif ou procédé selon la revendication 10, dans lequel, après mise à jour de la première fréquence, une période de temps donnée (Δt) est observée avant que ladite information relative au remplissage dudit élément de stockage (208) soit déterminée une nouvelle fois.

12. Dispositif selon l'une quelconque des revendications 1 ou 3 à 11, ou procédé selon l'une quelconque des revendications 2 à 11, dans lequel :
ledit élément de stockage (208) est une mémoire ou une banque de registres ; ou
ledit deuxième protocole de transfert de données (110, 150) est un protocole parmi le groupe comprenant USB3^{®}, USB4^{®}, DisplayPort^{®} et Ethernet^{®} ; ou
ledit premier protocole (Non-standard) de transfert de données est mis en œuvre par un canal radiofréquence, ou optique, ou un guide d'onde, relié à une entrée de l'élément de stockage (208) ; ou
ladite première fréquence est de plus basée sur une information mesurée, ou déterminée, ou prédéterminée, relative au deuxième protocole de transfert de donnée (110, 150).

13. Dispositif ou procédé selon l'une quelconque des revendications 9 à 11, ou 12 dans sa dépendance à la revendication 9, dans lequel la première fréquence est ajustée pour que l'élément de stockage (208) ne soit ni jamais vide, ni jamais plein.

14. Dispositif ou procédé selon la revendication 12, ou 13 dans sa dépendance à la revendication 12, dans lequel le dispositif (100) comprend un premier appareil (401) et un deuxième appareil (403) ;
le premier appareil (401) comprenant :
- une première interface physique (402) mettant en œuvre le deuxième protocole de transfert de données (110, 150) et configurée pour être reliée à un connecteur compatible avec le deuxième protocole de transfert de données (110, 150);
- un troisième bloc (120), relié à la première interface physique (402) et configuré pour mettre en œuvre une conversion du deuxième protocole de transfert de données (110) vers le premier protocole de transfert de données (Non-standard) ; et
- un émetteur radiofréquence (410) du canal radiofréquence (130), relié au deuxième bloc (120), et utilisant le premier protocole de transfert de données (Non-standard) ;
le deuxième appareil (403) comprenant :
- un récepteur radiofréquence (420) du canal radiofréquence (130) et utilisant le premier protocole de transfert de données (Non-standard) ;
- le premier bloc (140), relié au récepteur radiofréquence (420) ;
- une deuxième interface physique (450) mettant en œuvre le deuxième protocole de transfert de données (110, 150) et configurée pour être reliée à un connecteur compatible avec le deuxième protocole de transfert de données (110, 150).

15. Dispositif selon la revendication 14, dans lequel ladite information mesurée relative au deuxième protocole de transfert de données (110, 150) est mesurée dans le premier appareil (401) et transférée au deuxième appareil (403), via le canal (130), pour être utilisée par le premier bloc (140).
